Europäisches Patentamt

European Patent Office

Office européen des brevets

(11) Publication number: **0 154 817**
A1

# (12) EUROPEAN PATENT APPLICATION

(21) Application number: 85101466.2

(22) Date of filing: 12.02.85

(51) Int. Cl.⁴: **F 16 B 5/02**

(30) Priority: 23.02.84 US 583030

(43) Date of publication of application: 18.09.85
Bulletin 85/38

(84) Designated Contracting States: BE DE FR GB IT NL SE

(71) Applicant: Monogram Industries, Inc., c/o Nortek,
Inc. 815 Reservoir Avenue, Cranston Rhode
Island 02910 (US)

(72) Inventor: Pratt, John D., 6153 Sard Street, Rancho
Cucamonga California 91701 (US)
Inventor: Morrow, Joseph F., 47 Seaview South, Rolling
Hills Estate California 90274 (US)

(74) Representative: Patentanwälte Kohler - Schwindling -
Späth, Hohentwielstrasse 41, D-7000 Stuttgart 1 (DE)

(54) **Method of installing flush break blind fasteners and fasteners for same.**

(57) A blind fastener (45) and a method for installing such fastener (45) for securing workpieces (46, 48) is provided having as principle components a stem member (52), a drive-nut (55), and a deformable annular means (53). The stem member (52) has an externally-threaded-portion (59). The drive-nut (55) is screwed onto the externally-threaded-portion (59). The deformable annular means (53) has as principle parts a head (65) which is larger in diameter than the diameter of the workpieces (46, 48) aligned boreholes (50, 51), and an intermediate-part (67) adjacent the head (65). A deformable tail-part (62) is provided adjacent the intermediate-part (67) and abutting the stem-head (61) for securing the workpieces (46, 48) when the fastener (45) is set. The outer-portion of the stem member (52) contains a turning means (59) for rotating the stem member (52) relative to the drive-nut (55). Rotation of the stem member (52) relative to the drive-nut (55) will cause the stem member (52) to break at the intersection between the drive-nut (55) and head (65). The break is facilitated by providing e.g. the threaded-portion (56) with differing sized threads.

METHOD OF INSTALLING FLUSH BREAK BLIND
FASTENERS AND FASTENERS FOR SAME

CROSS-REFERENCE TO RELATED APPLICATION

This application is directed to subject matter in co-pending European applications Serial Nos. 84112447.2 and 84112446.4.

BACKGROUND OF THE INVENTION

1. Field of the Invention

This invention relates to fasteners, especially blind fasteners, such as rivets which are frequently used in the aerospace industry and in particular in fastening or joining aerodynamic and non-aerodynamic surfaces to structural members of an aircraft.

2. Description of the Prior Art

Blind fasteners are used in a variety of applications wherein access to the blind-side of surfaces being connected together is extremely limited or in some cases not possible. Various particular applications impose unique, stringent requirements for which the fastener must be particularly adapted.

The application in which rivets or fasteners are used in the construction of aerodynamic designs, aircraft and the like, impose some of the most stringent requirements. In particular, the fasteners must secure the members but resist losing their gripping power under the stresses and vibrations imposed upon them by the harsh environment in which they are used. It is desirable that such fasteners produce a bulbed-like configuration on the blind-side, or non-accessible side, of the workpieces being joined.

U.S. Patent 3,253,495 discloses an assembly consisting of a pin or stem having a head on the blind-side thereof and pull-grooves on the accessible-side thereof, which fits into a sleeve the blind-side portion of which is deformable into a bulbed-like shaped head. To use, the blind-bolt assembly is inserted into aligned boreholes of workpieces and a special tool having a plurality of chuck jaws grips the pull-grooves and pulls the pin outwardly away from the nonaccessible workpiece, thereby deforming the sleeve on the blind-side and forming a bulbed-like configuration. Unfortunately this fastener has several disadvantages. First the fastener requires a relatively expensive tool to effect its setting. Furthermore such a tool generally requires a relatively large amount of free-space on the accessible-side in order to grip the pin securely and complete the pulling operation required to set the fastener and form a tightly secured joint. In many situations in the aircraft industry, there is not available sufficient space on the accessible side to accomodate such special tools if such are required for the specific installation. Joints which are not tight must have the fastener drilled out and another joining operation attempted. Such corrective measures greatly increase the cost of fabrication.

Thus it is desirable to have a blind fastener which can be set without the need for specially designed tools and in fact, which can be set with readily available, relatively inexpensive, hand or power tools.

Other disadvantages of the blind bolt of 3,253,495 are that it has a relatively low preload retention, the importance of which will be subsequently explained, and it has a tendency to loosen its locking collar thereby reducing the gripping power of the bolt and increasing the deterioration of the joint through loss of the stem with subsequent loss of radial rigidity and continual exposure to vibration over longer periods of time.

Another blind rivet, disclosed in U.S. Patent No. 4,012,984, attempts to overcome the problem of losing the locking collar by providing a locking groove in the stem or pin of the rivet. This groove which is of a smaller

-2-

diameter than the main body of the stem, is designed to hold the locking collar in the assembled rivet after it is set. The features of the locking collar and its corresponding groove described in U.S. 4,012,984 are useful in this invention and accordingly the relevant teachings of U.S. 4,012,984 is hereby incorporated herein by reference. As in U.S. 3,253,495, U.S. 4,012,984 also has the serious disadvantage of requiring a special tool for gripping the stem portion of the rivet in order to set the rivet.

Both U.S. 3,253,495 and 4,012,984 employ break grooves which enable the surplus portion of the stem, after the rivet is set, to be broken away from the rivet upon further pulling by the special gripping tool. Unfortunately, a relatively rough surface is left on the accessible side of the rivet (as implied by FIG 5 of U.S. 4,012,984) which is aerodynamically undesirable in streamlined surfaces employed in the aircraft and aerospace industries. Furthermore rivets which are broken totally by tension on the stem with pull tools such as those employed in both U.S. 3,253,495 and 4,012,984 produce an undesirable shock load on the fastener when the stem breaks, due to pin recoil which results in a relatively low preload retention. This problem could, of course, be eliminated in the blind rivet of these types by cutting off the stem rather than rupturing in a stem-pull operation as currently employed. However, it can be appreciated that the added task of cutting off the stem of the rivet is both expensive and time consuming, and in some cases, not possible because of insufficient working space on the accessible side of the rivet.

The blind fastener described in assignee's drawing PLT-1040 consists of a flush nut which is internally threaded over its entire longitudinal length, a deformable sleeve, a core bolt and a drive-nut. After the fastener is set the drive-nut is unscrewed from the core bolt and the stem is cut off and milled flush. Although this fastener

-3-

has the advantage of eliminating stem or pin recoil it suffers from the disadvantage of requiring an expensive final milling operation to produce a smooth aerodynamically-acceptable surface. Fasteners such as the PLT-1040, are constructed from a high temperature A-286 alloy, and are used on honeycomb structures which can not withstand large amounts of compressive force or "clamp-up." After the fastener is set, the drive-nut is spun off (removed) from the stem member, the excess stem member clipped off, and the remaining stem member milled flush with the outer top surface of the flush-nut.

In order to prevent the removable portion of the stem member or "pin-tails" from inadvertently ending up in a piece of machinery, or laying about the aircraft structure so that it could possibly be sucked into the aircraft engine, thereby seriously damaging such machinery or engine, the aircraft industry laborously accounts for every pin-tail. Since the A-286 alloy and similar high strength, high temperature, alloys are nonmagnetic, a magnetic sweep of the aircraft structure and assembly area to recover the pin-tails is not possible because the drive-nut (which is magnetic) has been removed before the pin-tail is clipped. Thus it is desirable to have a fastener, which when the pin-tail is severed, has the drive-nut still attached to the pin-tail thereby allowing the pin-tail to be recovered by magnetic sweeping. There is another important advantage in having the drive-nut remain with its pin-tail, namely, since the pin-tail is relatively small (and the drive-nut relatively large) the pin-tail can become lodged in small openings from which it is very difficult to discover and effect its recovery.

In pull-type fasteners such as U.S. Patents 3,253,495 and 4,012,984 the force exerted on the workpieces by the fastener just before the stem ruptures, referred to as "clamp-up", is significantly higher than the force exerted on the workpieces after the stem is ruptured at the break

-4-

groove, referred to as "preload retention." This difference or loss of clamping force is attributed to stem recoil occuring at the time of stem rupture. The greater the stem recoil therefore the lower will be the force exerted on the workpieces by the fastener. Accordingly, it is desirable to sever the stem at the break groove in such a manner that stem recoil is eliminated or greatly reduced thereby resulting in higher preload retention.

Further disadvantages of other prior art fasteners are set forth in my copending application, Serial No. 242,892, commonly assigned, which is hereby incorporated herein by reference.

Accordingly, there is a need for a method of installing a blind fastener with commonly-available, relatively inexpensive, hand tools in which the surplus stem-portion can be severed without stem pulling and without expensive post-setting machining such as milling while at the same time producing an aerodynamically smooth surface at the severed stem and a joint having a relatively high preload retention. Such fasteners should induce screw failure at the faying surface of the drive-nut and nut body regardless of the grip condition of the fastener.

## SUMMARY OF THE INVENTION

It is an object of this invention to provide an improved method for installing blind fasteners for securing workpieces having aligned boreholes therethrough.

It is a further object of this invention to provide a method for installing blind fasteners wherein the fastener breaks at the faying surface between the drive-nut and nut body regardless of the grip conditon of the fastener.

It is a further object of this invention to provide fasteners which break flush at the faying surface between the drive-nut and nut body regardless of the grip condition of the fastener.

These and other objects are preferably accomplished

-5-

utilizing a fastener having a stem member and a corresponding drive-nut. The stem member has an externally-threaded-portion on the accessible side thereof and may have a stem-head on the nonaccessible-side thereof. The diameter of the stem-head may be slightly smaller than the diameters of the aligned boreholes. The drive-nut has an internally-threaded-portion permitting the drive-nut to be screwed onto the externally-threaded-portion of the stem member.

The fastener further comprises a deformable annular means for securing workpieces together having a head which is larger in diameter than the diameter of the aligned boreholes, an intermediate part adjacent to the head, such that the combined longitudinal lengths of the head and the intermediate-part is, when the fastener is set, at least equal to the combined thicknesses of the workpieces, and a deformable tail-part adjacent the intermediate-part and abutting the stem-head and having an outside diameter smaller than the diameter of the boreholes for securing the workpieces when the fastener is set. The head is essentially free of a cavity or cavities which are operative for gripping with a tool which will prevent rotation of the annular means.

The fastener also comprises turning means in the outer-portion of the stem member for rotating the stem member relative to the drive-nut.

The improved method includes the turning means and holding the drive-nut stationary while rotating the turning means relative to the drive-nut until the stem member breaks off at the junction between the drive-nut and the head.

The fastener may include a break groove in the stem member which has sufficient radial depth so that when the fastener is set, turning of the stem member relative to the drive-nut will cause the stem member to break at the break groove. The break groove is located at a point on the stem

-6-

member which is, when the fastener is set, substantially flush with the top outer surface of the head of the annular means. However, breakoff will occur at the junction between the drive-nut and the head even if no break groove is provided in the stem member. Further, the stem member may be held fast with a suitable tool while the drive-nut is rotated which also results in stem breakoff.

In the method disclosed herein, it is not necessary that the drive-nut be removed from the stem member before the stem member is severed. Thus the drive-nut advantageously remains with the severed portion of the stem member so that it can be recovered by a magnetic sweep of the area. Thus, the stem member can be made of nonmagnetic material and, since the broken off piece is attached to the drive-nut, it can be removed along with the drive-nut during such magnetic sweep.

The method disclosed herein enables use of inexpensive fasteners resulting in flush stem-break, and may be installed with lighter, less-expensive, standard hand-tools, have a higher clamp-up and preload retention, and may be installed where the free space on the accessible-side is relatively small.

BRIEF DESCRIPTION OF THE DRAWING

FIG 1 is a partial cross-sectional view of a prior art blind fastener illustrating basic concepts in installation of such fasteners;

FIG 2 is a cross-sectional view of the fastener of FIG 1 illustrating the teachings of this invention;

FIG 3 is a cross-sectional view of the fastener of FIG 2 after the fastener has been set in accordance with the teachings of the invention;

FIG 4 is a cross-sectional view of a modification of the fastener of FIG 2;

FIG 5 is a cross-sectional view of the fastener of FIG 4 after it has been set;

FIG 6 is a cross-sectional view of a further modification of the fastener of FIG 2;

FIG 7 is a cross-sectional view of the fastener of FIG 6 after it has been set;

FIG 8 is a perspective view of the screw alone of the fastener of FIGS 6 and 7; and

FIG 9 is a cross-sectional view of a further modification of the fastener of FIG 2.

FIG 10 is a reproduction of FIGS 7 and 8 of co-pending European patent application Serial No. 84112446.4.

## DESCRIPTION OF THE PREFERRED EMBODIMENT

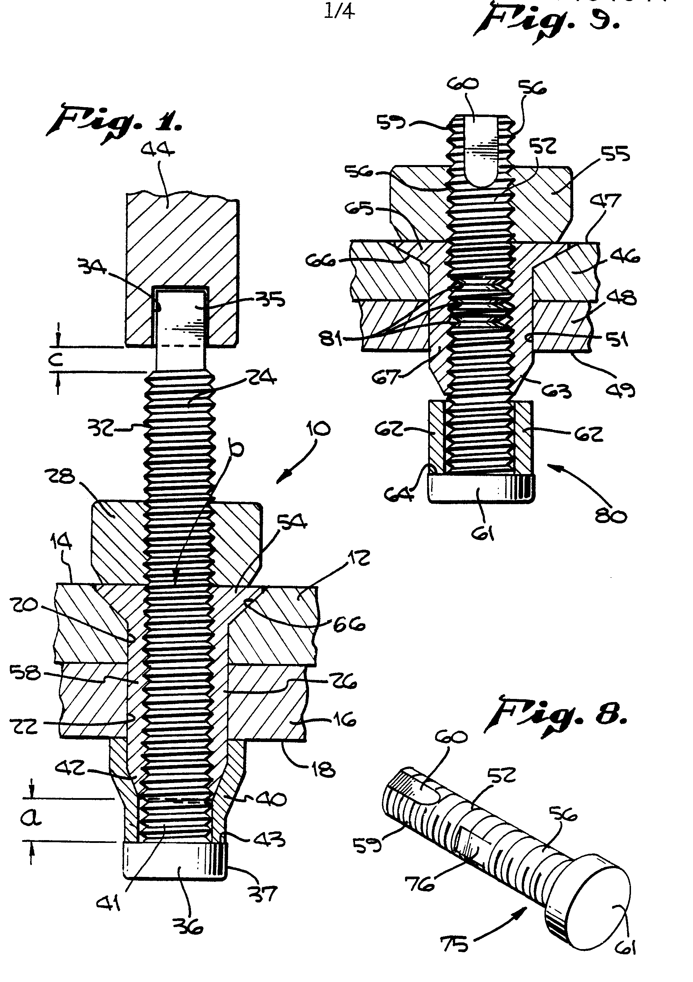

Referring to FIG 1, a fastener 10 is shown used to join outer and accessible workpiece 12 having accessible surface 14 and inner or nonaccessible workpiece 16 having nonaccessible surface 18. Fastener 10 is inserted through aligned boreholes 20 and 22 of the accessible and nonaccessible workpieces. The principal components of fastener 10 consists of screw or stem member 24, annular means 26 and drive-nut 28.

Stem member 24 is externally-threaded throughout its length at 32 and includes turning means 35 having wrenching flats 34 at one end. The outside diameter 37 of stem-head 36 is just slightly smaller than the diameter of the boreholes 20 and 22. Stem head 36 forms the terminal end of threaded portion 32.

Annular means 26 comprises annular head 54, which is shown as annular but is not necessarily always so, annular shoulder-section 66 and annular main section 58.

A deformable annular sleeve 40 is provided between stem head 36 and surface 18. Of course, prior to assembly, sleeve 40 merely encircles the end 41 of stem member 24 and is not deformed as is well known in the prior art. Also, the terminal end 42 of main section 58 is tapered so that sleeve 40 can ride up thereon and deform between shoulder 43 of stem head 36 and surface 18 all as well known in the art.

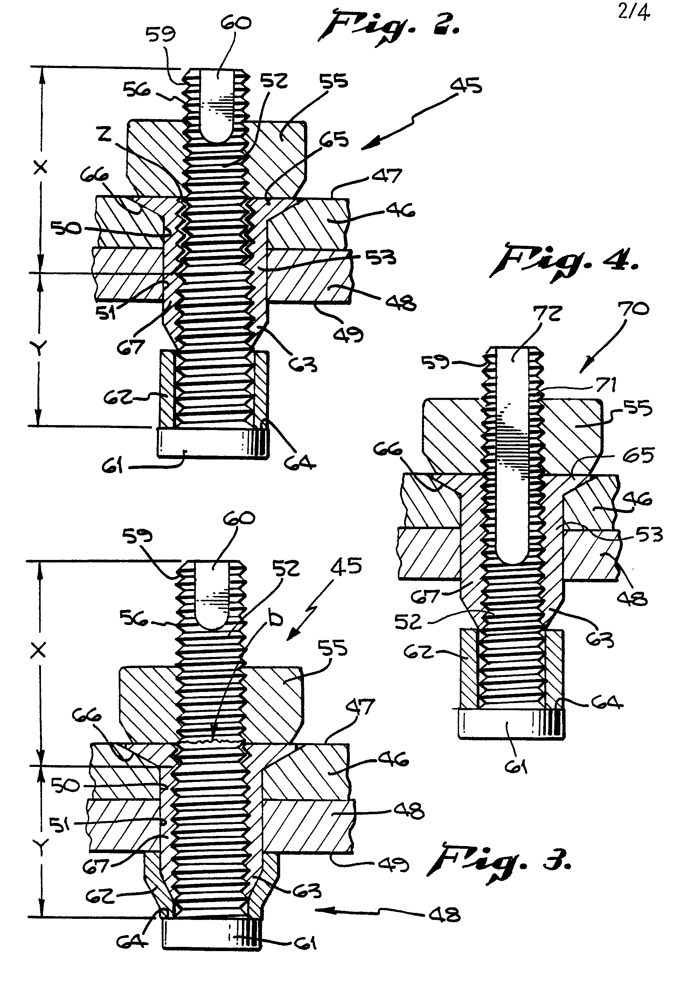

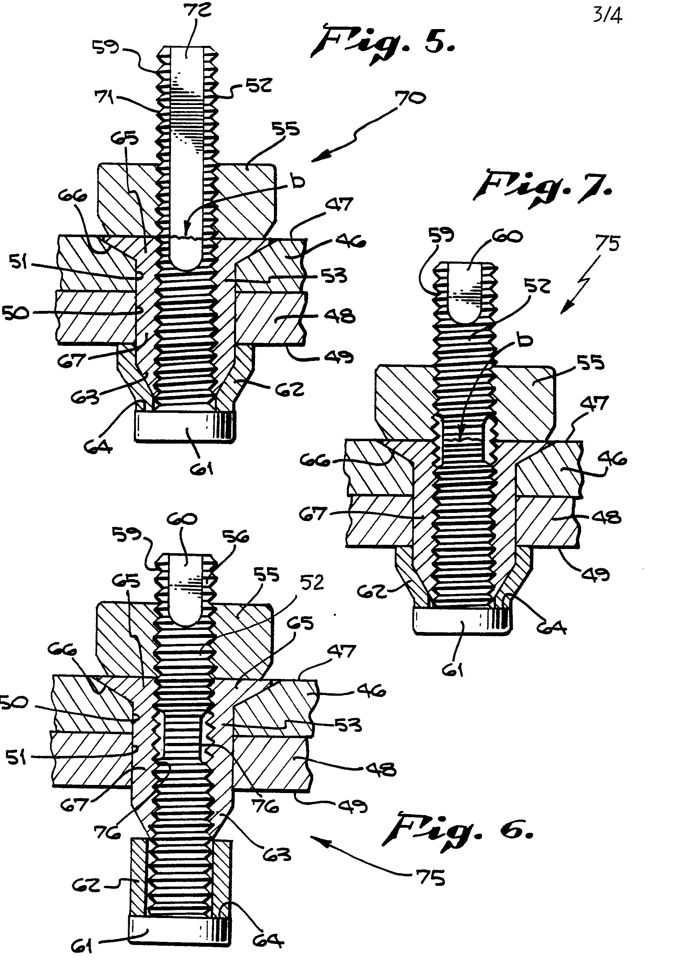

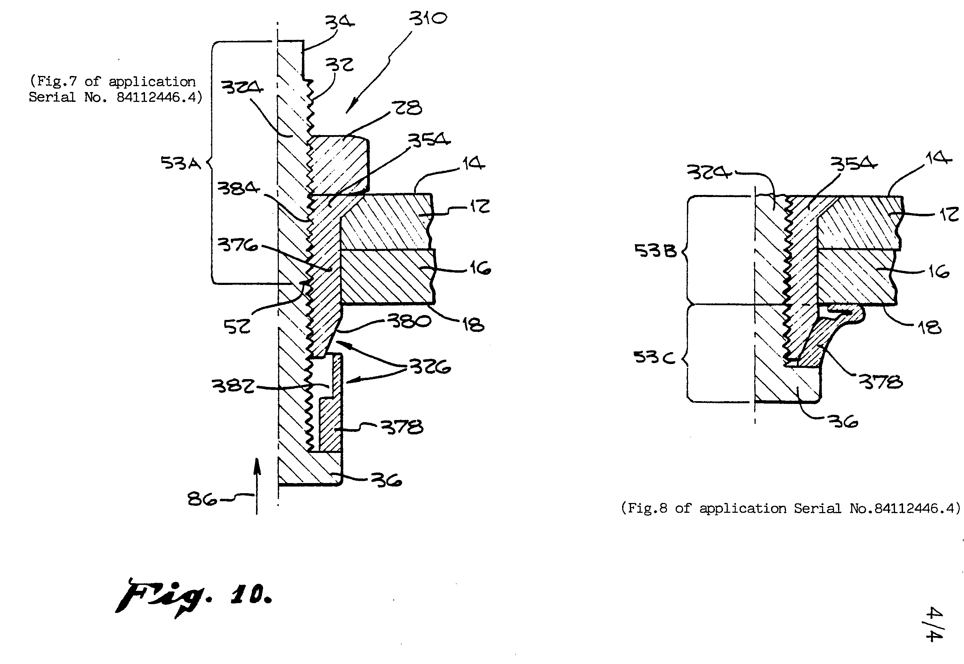

In commonly assigned application No. 84112446.4 there is described an apparatus in FIGS. 7 and 3
therein for installing blind fasteners whereby a wrench or
(FIG 10 of this application)
similar tool (not shown) is used to hold a drive-nut 28
while a conventional wrenching tool engages flats 34 and
either tool is rotated while holding the other until the
deformable section of the annular means (section 378 in
application Serial No. 84112446.4      .  ·    deforms and
abuts against surface 18.   In FIG 1 herein, deformable
sleeve 40 functions similarly as section 378 in application
Serial No. 84112446.4.                    Thus, in like manner,
in the arrangement of FIG 1 herein, the stem 24 may be
rotated by turning means 35 until the deformable sleeve 40
deforms and abuts against the surface 18.   That is, by
rotating member 24 while holding drive-nut 28 firmly .
against rotation, fastener 10 is set and sleeve 40 is
deformed against lower and nonaccessible surface 18 of
inner workpiece 16, as shown in FIG 8 of application Serial
No. 84112446.4                 with regard to section 378
therein.   Further rotation of stem member 24 relative to
drive-nut 28 while holding the drive-nut 28 firmly against
rotation causes the stem to twist off and break relatively
smoothly at the break groove 52 in FIG 7 in application
Serial No. 84112446.4                without stem recoil
thereby producing a joint having relatively high preload
retention.   As  discussed  in  application  Serial  No.
84112446.4          the  torsion  created  is  such  that  once
portion 378 therein reaches the final deformed position
shown in FIG 8 therein, the stem member 24 will break off
regardless of whether or not break groove 52 is provided in
the stem member 24.   Thus, the break groove 52 in FIG 7 of
application Serial No. 84112446.4                    may be
eliminated.   This is the situation illustrated in FIG 1
herein since no break groove is shown.   During installation
of screw 24 as heretofore described, the screw 24 is
subjected to shear (torsion), tensile and bending stresses.
These stresses may cause the screw 24 to fail at any one of three locations, a, b or c. Since it is desired to have screw 24 fail at the top surface of the nut body head 54 (i.e., at surface b - but only after clamp-up), it is necessary to either make that location of screw 24 the most highly stressed, or, weaker than the other possible failure points (a or c), or a combination of both.

In other words, during installation of the fastener 10 of FIG 1, area a is exposed to tension loads equal to the sum of clamp-up (the joint compressive force caused by the sleeve 40 bearing against blind side 18) and the force required to push the sleeve 40 up the tapered nose 42 and along body portion 58. Unless the various components of fastener 10 are perfectly square and concentric, the screw 24 at area a is subjected to binding stresses.

At point b, the screw 24 is subjected to torsion (shear) stress, caused by the torque applied to set the fastener 10 and by tensile stress caused by the "jam nut" effect of the nut head 54 and drive-nut 28. Area c is subjected to torsion, as is the rest of screw 24, but is more highly stressed in torsion than the remainder of screw 24 because wrenching flats 34 cause this area to have a smaller cross section than the remainder of screw 24.

It can be seen, then, that in the installation of fasteners of the type illustrated in FIG 1, using the technique disclosed in copending application Serial No. 84 112 447.2, the fastener 10 will tend to fail at area a. If area a were made stronger, the fastener 10 would fail at area c. Since it is desirable for proper installation, using the techniques and methods disclosed in copending application Serial No. 84 112 447.2, to have the screw 24 fail at point b, it is necessary to modify the fastener of FIG 1.

Thus, as particularly contemplated in the present invention, referring now to FIG 2, of the invention, a fastener 45 is shown, similar to that of FIG 1, used to join outer and accessible workpiece 46 having accessible

-10-

surface 47 and inner or nonaccessible workpiece 48 having nonaccessible surface 49. Fastener 45 is inserted through aligned boreholes 50, 51 of the accessible and non-accessible workpieces 46, 48. The principal components of fastener 45 consists of screw or stem member 52, annular means 53 and drive nut 55. Annular means 53 includes head 65, shoulder section 66 and threaded annular main section 67. Stem member 52 is externally threaded throughout its length at 56 and includes turning means 59 having wrenching flats 60 at one end. Stem head 61 is provided at the terminal end of threaded portion 56. A deformable annular sleeve 62 is provided between stem head 61 and surface 49. The terminal end 63 of main section 53 is tapered so that sleeve 62 can ride up thereon and deform between shoulder 64 of stem head 61 and surface 49 as is well known in the art. The final installation position, as will be discussed further, is shown in FIG 3.

As particularly contemplated in the present invention, it is desirable to induce failure of screw 52 at the faying surface $b$ (FIG 3) between drive-nut 55 and head 65. As shown in FIG 2, this is accomplished by making the threads along area $x$ of threaded portion 56 lesser in size than the threads along area $y$ of FIG 2. That is, the cross-sectional diameter of threads along area $x$ may be less than the cross-sectional diameter of threads along area $y$. Thus, as seen in FIG 2, prior to installation, the threads of section 67 of the annular means 53 engage the threaded area $y$ whereas a space $z$ is created between the threads of section 67 and threaded area $x$. The cross-sectional inner diameter of threaded section 67 is thus related to the cross-sectional diameter of threaded area $y$. When the fastener 45 is installed in the manner heretofore described and discussed in detail in application serial No. 84 112 447.2, , until it reaches the condition illustrated in FIG 3, threaded area $x$ is above and below the faying surface $b$ and threaded area $y$ is below the faying surface

-11-

<u>b</u>. The screw 5ɔ thus breaks flush along faying surface <u>b</u> and no shaving or other removal of the broken off stem is necessary. The broken off stem piece (along area <u>x</u> in FIG 3) falls off along with drive-nut 55 to which it is attached and, if nut 55 is of magnetic material, can be retrieved magnetically as discussed in copending application Serial No. 84 112 447.2.

Referring now to FIG 4 wherein like numerals refer to like parts of the embodiment of FIGS 2 and 3, a second fastener 70 is shown. In fastener 70, threaded area 71 of screw 52 differs from area 56 of the fastener 45. Area 71 is of generally uniform cross-section throughout its entire length. However, in this embodiment, flats 72 differ from flats 60 of fastener 45 and extend down along the screw 52 to a point substantially mid-way between head 65 and tapered end 63 of annular means 53. Since the flat area of screw 52, that is, the area from the upper surface of screw 52 in FIG 4 to the bottom of flats 72, is obviously of a lesser cross section (and thus weaker) than the non-flat area of screw 52, the fastener 70 will break along faying surface b as shown in FIG 5 at final installation.

Referring now to FIGS 6 and 7 of the drawing, another fastener 75 is shown wherein like numerals again refer to like parts of the fastener of FIGS 2 and 3. In this embodiment, one or more breaking slots 76 (see also FIG 8) are providing in the body of screw 52 generally at a midpoint along the screw area 56 thereof so that, when assembled as shown in FIG 6, these slots 76 are located substantially at the junction of surfaces 46 and 48. These slots are cut into the body of screw 52 and thus form a weakened area. When fastener 75 is installed as heretofore described and as shown in FIG 7, the screw 52 breaks clearly along faying surface <u>b</u> or at a point midway within slot or slots 76. Slots 76 may be one or more and located on one or both sides of screw 52.

Still other means of mechanically inducing failure

-12-

along faying surface to insure screw failure at that point may occur to an artisan. For example, as shown in FIG 9 wherein again like numerals refer to like parts of the fastener of FIGS 2 and 3, fastener 80 may be weakened or annealed at a predetermined point. For example, a plurality of annular break grooves or weakened annealed areas 81 may be provided at a point on screw 52 similar to the location of slot or slots 76 in FIG 6. Thus, fastener 80 will break at installation in the area of grooves or annealed areas 81 and thus coincident with the faying surface b between nut 55 and head 65.

It can be seen in all embodiments that the various fasteners include mechanical means to insure screw failure at the faying surface between drive nut 28, and nut head 65. Of course, locking collars as disclosed in co-pending application Serial No. 84 112 446.4 may be provided in all embodiments. Also, although separate deformable collars 40 are disclosed herein, obviously the teachings herein encompass the use of a tubular nut similar to those disclosed in copending applications Serial Nos. 84 112 446.4 and 84 112 447.2, wherein the deformable element of the fastener is an integral part of the annular means and not a separate element. The stem member may also be of non-magnetic material while the drive-nut may be of magnetic material so that retrieval is effected as described in copending application Serial No. 84 112 447.2.

The techniques and method disclosed herein permits use of fasteners which are relatively inexpensive, can be adopted to have a flush stem-break, can be installed with lighter, less-expensive, standard hand-tools, have a higher clamp-up and preload retention, and can be installed where the free space on the accessible-side is relatively small.

What is claimed is:

1. A blind fastener for installation in workpieces (46, 48) having aligned bore holes (50, 51) therethrough, and an access side (47) and a blind side (49), said fastener (45) comprising a stem member (52) having an externally-threaded-portion (56), a drive-nut (55) having an internally-threaded-portion permitting said drive-nut (55) to be screwed onto the externally-threaded-portion (56) of said stem member (52), deformable annular means (53) having a head (65) for securing said workpieces (46, 48) together, said head (65) being larger in diameter than the diameter of said aligned boreholes (50, 51), an intermediate-part (67) adjacent said head (65), the combined longitudinal lengths of said head (65) and said intermediate-part (67) being, when said fastener (45) is set, at least equal to the combined thicknesses of said workpieces (46, 48), and a deformable tail-part (62) adjacent said intermediate-part (67), and having an outside diameter smaller than the diameter of said boreholes (50, 51), for securing said workpieces (46, 48) when said fastener (45) is set, said head (45) being essentially free of a cavity which is operative for gripping with a tool to prevent rotating of said annular means (53), turning means (59) in the outer portion of said stem member (52) for rotating said stem member (52) relative to said drive-nut (55), said turning means (59) and said drive-nut (55) being operable for effecting the setting of said fastener (45) by rotating said turning means (59) relative to said drive-nut (55) without the necessity for absolutely preventing any rotation of said annular means (53) relative to said drive-nut (55), characterized by

said externally threaded portion (56) of said stem member (52) having a cross-sectional outer diameter therethrough above a point about midway along its length substantially less than the cross-sectional outer diameter through said externally threaded portion (56) of said stem member below said point.

./.

2. The fastener of claim 1, characterized by said point being located along the intermediate-part (67) of said annular means (53) between the head (65) thereof and the tail-part (62) prior to setting of said fastener (45) providing an area (b) susceptible to break-off when said fastener (45) is set, said stem member (52) being adapted to break-off along substantially said point when set whereby, when set, said stem member (52) breaks off at a point thereon flush with the head (65) of said annular means (53) on the side thereof opposite said intermediate-part (67).

3. A blind fastener for installation in workpieces (46, 48) having aligned boreholes (50, 51) therethrough, and an access side (47) and a blind side (41), said fastener (70) comprising a stem member (52) having an externally-threaded-portion (56) and a stem-head (61), the diameter of said stem head (61) being slightly smaller than the diameter of said boreholes (50, 51), a drive-nut (55) having an internally-threaded-portion permitting said drive-nut (55) to be screwed onto the externally-threaded-portion (56) of said stem member (52), deformable annular means (53) for securing said workpieces (46, 48) together having a head (65) which is larger in diameter than the diameter of said aligned boreholes (50, 51), an intermediate-part (67) adjacent said head (65), the combined longitudinal lengths of said head (65) and said intermediate-part (67) being, when said fastener (70) is set, at least equal to the combined thicknesses of said workpieces (46, 48), and a deformable tail-part (62) adjacent said intermediate-part (67) and abutting said stem-head (61), and having an outside diameter smaller than the diameter of said boreholes (50, 51),for securing said workpieces (46, 48) when said fastener (70) is set, said head (65) being essentially free of a cavity which is operative for gripping with a tool to prevent rotating of said annular means (53), turning means (59) in the outer portion of said stem member (52) for rotating said stem member (52) relative to said drive-nut (55), said turning means (59) and said drive-nut (55) being operable for effecting the setting of said fastener (70) by rotating said turning means (59) relative to said drive-nut (55) without the necessity for absolutely preventing any rotation of said annular means (53) relative to said drive-nut (55), characterized by

said turning means (59) including flats (72) on the outer portion of said stem member (52), said flats (72) extending down said stem member (52) from the top thereof to said stem-head (61) and terminating at a point substantially midway between the top of said stem member (52) and said stem-head (61).

4. A blind fastener for installation in workpieces (46, 48) having aligned boreholes (50, 51) therethrough, and an access side (47) and a blind side (49), said fastener (75) comprising a stem member (52) having an externally-threaded-portion (56) and a stem-head (61), the diameter of said stem-head (61) being slightly smaller than the diameter of said boreholes (50, 51), a drive-nut (55) having an internally-threaded-portion permitting said drive-nut (55) to be screwed onto the externally-threaded-portion (56) of said stem member (52), deformable annular means (53) for securing said workpieces (46, 48) together having a head (65) which is larger in diameter than the diameter of said aligned boreholes (50, 51), an intermediate-part (67) adjacent said head (65), the combined longitudinal lengths of said head (65) and said intermediate-part (67) being, when said fastener (75) is set, at least equal to the combined thicknesses of said workpieces (46, 48), and a deformable tail-part (62) adjacent said intermediate-part (67) and abutting said stem-head (61), and having an outside diameter smaller than the diameter of said boreholes (50, 51), for securing said workpieces (46, 48) when said fastener (75) is set, said head (65) being essentially free of a cavity which is operative for gripping with a tool to prevent rotating of said annular means (53),

./.

turning means (59) in the outer portion of said stem member (52) for rotating said stem member (52) relative to said drive-nut (55), said turning means (59) and said drive-nut (55) being operable for effecting the setting of said fastener (75) by rotating said turning means (59) relative to said drive-nut (55) without the necessity for absolutely preventing any rotation of said annular means (53) relative to said drive-nut (55), characterized by·

said stem member (52) having at least one breaking slot (76) therein extending into the body thereof located at a point about midway between the top of said stem member (52) and said stem-head (61).

5. The fastener of claim 4, characterized in that at least two such breaking slots (76) are provided on opposite sides of saidsaid stem member (52).

6. A blind fastener for installation in workpieces (46, 48) having aligned boreholes (50, 51) therethrough, and an access side (47) and a blind side (49), said fastener (80) comprising a stem member (52) having an externally-threaded-portion (56) and a stem-head (61), the diameter of said stem-head (61) being slightly smaller than the diameter of said boreholes (50, 51), a drive-nut (55) having an internally-threaded-portion permitting said drive-nut (55) to be screwed onto the externally-threaded-portion (56) of said stem member (52), deformable annular means (53) for securing said workpieces (46, 48) together having a head (65) which is larger in diameter than the diameter of said aligned boreholes (50, 51), an intermediate-part (67) adjacent said head (65), the combined longitudinal lengths of said head (65) and said intermediate-part (67) being, when said fastener (80) is set, at least equal to the combined thicknesses of said workpieces (46, 48), and a deformable tail-part (62) adjacent said intermediate-part (67) and abutting said stem-head (61), and having an outside

./.

diameter smaller than the diameter of said boreholes (50, 51), for securing said workpieces (46, 48) when said fastener (80) is set, said head (65) being essentially free of a cavity which is operative for gripping with a tool to prevent rotating of said annular means (53), turning means (59) in the outer portion of said stem member (52) for rotating said stem member (52) relative to said drive-nut (55), said turning means (59) and said drive-nut (55) being operable for effecting the setting of said fastener (80) by rotating said turning means (59) relative to said drive-nut (55) without the necessity for absolutely preventing any rotation of said annular means (53) relative to said drive-nut (55), characterized by

said stem member (52) having a plurality of spaced annular break grooves (81) provided on the outside of the body of said stem member (52) located at a point about midway between the top of said stem member (52) and said stem-head (51).

7. The fastener of claim 6, wherein three such break grooves (81) are provided.

8. The fastener of any of claims 1 to 7, wherein said stem member (52) is made of a non-magnetic material and said drive-nut (55) is made of magnetic material.

9. A method for installing the blind fastener (45) of any of claims 1, 2 or 8 in workpieces (46, 48) having aligned boreholes (50, 51) therethrough, and an access side (47) and a blind side (41), characterized by the steps of:

threading the drive-nut (55) onto an externally-threaded-portion (x) lesser in thread diameter of the stem member (52) until said drive-nut (55) abuts against the stem-head (61) of said stem member (52);

inserting said fastener (45) into the aligned boreholes (50, 51) in said workpieces (46, 48) until the stem-head (61) of said

./.

stem member (52) abuts against the blind side (49) of said workpieces (46, 48); and

holding either said drive-nut (55) firmly while rotating the turning means (59) or holding said turning means (59) firmly while rotating said drive-nut (55) until said stem member (52) severs and said drive-nut (55) remains attached to the severed part of said stem member (52), said sever being located at a point (b) on said stem member (52) where the lesser in thread diameter of said externally-threaded-portion (56) intersects with the greater in thread diameter portion thereof.

10. A method for installing the blind fastener (70) of any of claims 2 or 8 in workpieces (46, 48) having aligned boreholes (50, 51) therethrough, and an access side (47) and a blind side (49), characterized by the steps of:

threading the drive-nut (55) onto the externally-threaded-portion (56) of the stem member (52) having flats (72) thereon until said drive-nut (55) abuts against the head of the annular means;

inserting said fastener (70) into the aligned boreholes (50, 51) in said workpieces (46, 48) until the head (65) of said annular means (53) abuts against the non-blind side (47) of said workpieces (46, 48); and

holding either said drive-nut (55) firmly while rotating the turning means (59) or holding said turning means (59) firmly while rotating said drive-nut (55) until said stem member (52) severs and said drive-nut (55) remains attached to the severed part of said stem member (52), said sever being located at a point (b) on said stem member (52) where the flatted portion of said stem member (52) intersects substantially with the non-flatted portion thereof.

./.

11. A method for installing the blind fastener (75) of any of claims 4, 5 or 8 in workpieces (46, 48) having aligned boreholes (50, 51) therethrough, and an access side (47) and a blind side (49), characterized by the steps of:

threading the drive-nut (55) onto the externally-threaded-portion (56) of the stem member (52) above the portion having the breaking slot (76) therein until said drive-nut (55) abuts against the head (65) of said annular means (53);

inserting said fastener (75) into the aligned boreholes (50, 51) in said workpieces (46, 48) until the head (65) of said annular means (53) abuts against the non-blind side (47) of said workpieces (46, 48); and

holding either said drive-nut (55) firmly while rotating the turning means (59) or holding said turning means (59) firmly while rotating said drive-nut (55) until said stem member (52) severs and said drive-nut (55) remains attached to the severed part of said stem member (52), said sever being located at said breaking slot (76) on said stem member (52).

12. The method of claim 11, including the step of providing a second breaking slot in said stem member on the side thereof opposite said first breaking slot prior to the step of threading.

13. A method for installing the blind fastener (80) of any of claims 6 to 9 in workpieces (46, 48) having aligned boreholes (50, 51) therethrough, and an access side (47) and a blind side (49), characterized by the steps of:

threading the drive-nut (55) onto the externally-threaded-portion (56) of the stem member (52) above the break grooves (81) until said drive-nut (55) abuts against the head (65)of said annular means (53);

inserting said fastener (80) into the aligned boreholes (50, 51) in said workpieces (46, 48) until the head (65) of said annular means (53) abuts against the non-blind side (47) of said workpieces (46, 48); and

./.

holding either said drive-nut (55) firmly while rotating the turning means (59) or holding said turning means (59) firmly while rotating said drive-nut (55) until said stem member (52) severs and said drive-nut (55) remains attached to the severed part of said stem member (52), said sever being located at said break grooves (81).

0154817

**Fig. 9.**

**Fig. 1.**

**Fig. 8.**

0154817
2/4

Fig. 2.

Fig. 4.

Fig. 3.

Fig. 5.

Fig. 7.

Fig. 6.

0154817
3/4

(Fig.7 of application
Serial No. 84112446.4)

(Fig.8 of application Serial No.84112446.4)

Fig. 10.

0154817

4/4

0154817

**European Patent Office**

**EUROPEAN SEARCH REPORT**

Application number

| | DOCUMENTS CONSIDERED TO BE RELEVANT | | EP 85101466.2 |
|---|---|---|---|

| Category | Citation of document with indication, where appropriate, of relevant passages | Relevant to claim | CLASSIFICATION OF THE APPLICATION (Int. Cl.4) |
|---|---|---|---|
| D,A | US - A - 3 253 495 (JOHN F. ORLOFF) <br> * Claim 1; fig. 1,2; column 2; column 3, lines 1-28 * <br> -- | 1,6,9 | F 16 B 5/02 |
| D,A | US - A - 4 012 984 (JOSIP MATU-SCHEK) <br> * Claim 1; fig. 1,2; columns 1, 2 * <br> ---- | 1,6 | |
| | | | **TECHNICAL FIELDS SEARCHED (Int. Cl.4)** <br><br> F 16 B |

The present search report has been drawn up for all claims

| Place of search | Date of completion of the search | Examiner |
|---|---|---|
| VIENNA | 13-05-1985 | HEIN |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO Form 1503 03 82